Europäisches Patentamt

European Patent Office

Office européen des brevets

(11) Publication number: **0 109 260**
**B1**

(12) **EUROPEAN PATENT SPECIFICATION**

(45) Date of publication of patent specification: **15.03.89**    (51) Int. Cl.⁴: **H 04 M 3/56**

(21) Application number: **83306838.0**

(22) Date of filing: **09.11.83**

(54) Telephone conference system.

(30) Priority: **12.11.82 JP 171933/82 u**

(43) Date of publication of application:
· **23.05.84 Bulletin 84/21**

(45) Publication of the grant of the patent:
**15.03.89 Bulletin 89/11**

(84) Designated Contracting States:
**BE DE FR GB SE**

(56) References cited:
**L'ONDE ELECTRIQUE, vol. 62, no. 1, January
1982, pages 41-46, Masson, Paris, FR; M.
VIALARON: "Réseau francais de téléconférence
audiographique"
JOURNAL OF THE ACOUSTICAL SOCIETY OF
AMERICA, vol. 64, no. 6, December 1978, pages
1561-1565, Acoustical Society of America, New
York, US; J.E. WEST et al.: "Experimental
speakerphone system for teleconferencing"**

(73) Proprietor: **FUJITSU LIMITED
1015, Kamikodanaka Nakahara-ku
Kawasaki-shi Kanagawa 211 (JP)**

(72) Inventor: **Sudo, Yozo
7-9-16, Nishitsuruma
Yamato-shi Kanagawa 242 (JP)**
Inventor: **Murai, Atsuya
Ishizukaso, 951 Mizonokuchi Takatsu-ku
Kawasaki-shi Kanagawa 213 (JP)**
Inventor: **Mori, Hiroyuki
Taunhausu Kaitori, 2-2-106 2-12, Kaitori
Tama-shi Tokyo 206 (JP)**

(74) Representative: **Skone James, Robert Edmund
et al
GILL JENNINGS & EVERY 53-64 Chancery Lane
London WC2A 1HN (GB)**

EP 0 109 260 B1

## Description

The present invention relates to a telephone conference system and more particularly to an improvement of a telephone conference system which interconnects conferences held at a plurality of sites as if the plurality of conferences where being held at only one site.

Due to the developments made in transportation systems, the traveling time between two or more places has been made considerably shorter. However, the utilisation of transportation systems for participating in conferences requires time and expense, the amount of time and expense being proportional to the number of people participating in a conference.

Therefore, a conference held by people from factories at different sites involves much expense and loss of time.

In view of this, there has been a need for the unification of a plurality of conference sites by a telephone switching system.

In conventional telephone conference systems, the number of microphones and speakers are determined according to the number of participants and the arrangement of each of the conference seats. The number of microphones and speakers are also determined so that a participant's voice can be clearly heard by all of the other participants without the necessity of rearranging the microphones and speakers.

The number of participants differs in accordance with the content of the conference, with the result that the required number of speakers and microphones differs depending on the type of conference. Therefore, the capacity suitable for common amplifiers for the transmitter-receiver and the number of circuits used in mixers also differ.

Usually, at each conference site, the conference system is formed with a suitable scale of equipment in accordance with the number of participants so that various conference systems providing a predetermined number of microphones and speakers in accordance with the conference scale are required.

Consequently, if the scale of the conference is determined in accordance with the maximum number of participants, usually the telephone conference system is very uneconomical. A conference system of this type is described in "Réseau francais de téléconference audiographique" published in L'Onde Electrique, January 1982, pages 41—46. In this system a number of microphones are connected via a preamplifier and mixer to a bandpass filter to transmission along a telephone line.

Another telephone conference system is described in "Experimental speakerphone system for teleconferencing", published in the Journal of the Acoustical Society of America, Vol 64, No. 6, pages 1561—1565. In this case, the microphones are all connected to a common mixer circuit whose output is connected to a transmit telephone line while a receive telephone line is connected to an amplifier whose output is connected to all the loud speakers. In this system, the single mixer circuit adds micro-currents and therefore an unacceptable level of noise will relatively quickly be introduced into the resultant signal.

In accordance with the present invention, a telephone conference system in which microphones and speakers are connected to a telephone apparatus is characterised by a plurality of units connected in cascade to the telephone apparatus, each unit comprising a speaker or speakers connected via an amplifier to a receiving line for receiving signals from the telephone apparatus, a preamplifier-mixer for unifying the outputs of a plurality of microphones, and a summing amplifier which is connected to the preamplifier-mixer of the same unit and the summing amplifier of an upstream unit for unifying the output of the preamplifier-mixer of the same unit and the output of a microphone or micropnones from the upstream unit, the output of the summing amplifier being connected to a downstream unit in series or to the telephone apparatus.

With the present invention a telephone conference system is provided in which the above-mentioned drawbacks are eliminated by connecting a number of self-contained units in series or cascade and in which the scale of the conference system can be determined in accordance with the minimum number of participants. Furthermore, the scale of the system can be varied in accordance with the number of participants.

An example of a telephone conference system in accordance with the present invention will now be described and contrasted with a prior art system with reference to the accompanying drawings, in which:-

Figure 1 is a block diagram of an example of a conventional phone conference system;

Figure 2 is a block diagram of one unit of an example of a telephone conference system according to the present invention;

Figure 3A is a block diagram of the preamplifier mixer shown in Figure 2, and Figure 3B is a block diagram of the summing amplifier shown in Figure 2;

Figure 4 is a block diagram of the example of telephone conference system;

Figure 5A is a top perspective view of the unit shown in Figure 2, and Figure 5B is a bottom perspective view of the unit shown in Figure 5A; and,

Figure 6 is a schematic view of a telephone conference in which the system shown in Figure 4 is used.

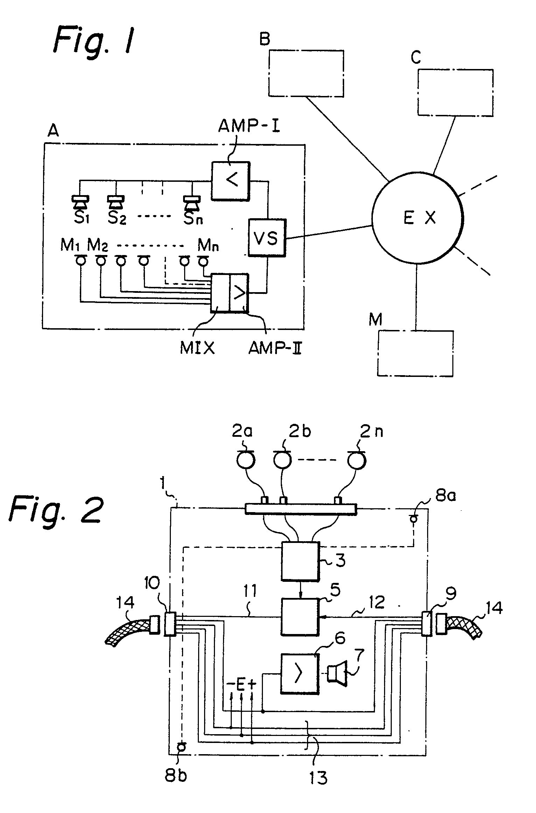

As is shown in Figure 1, in one example of a conventional phone conference system, the apparatus A, B, C, ...M located in separate places each provide a plurality of speakers $S_1$, $S_2$...$S_n$, a common receiving amplifier AMP-I for the speakers, a plurality of microphones $M_1$, $M_2$...$M_n$, a mixer MIX for the microphones, a common sending amplifier AMP-II, and a voice switch $V_s$.

The apparatus A, B, C,... M are connected to each other via an exhange EX.

In the prior art system shown in Figure 1, the scale of the system is determined by the maximum number of participants. Therefore, when the number of participants is small, this system is uneconomical.

Figure 2 is a block diagram of one unit in one embodiment of a system according to the present invention. In Figure 2, a unit body 1 includes a preamplifier-mixer 3 which unifies the outputs of a plurality of microphones 2a, 2b, ..., 2n detachably connected to the unit body 1 with a plug jack, a summing amplifier 5 which unifies the output of the preamplifier-mixer 3 and the output of another unit, a receiving amplifier 6, and a speaker 7. Internal microphones 8a and 8b positioned in corners of the unit body 1 are connected to the preamplifier-mixer 3 and can be used in place of the microphones 2a, 2b,..., 2n attached to the outside of the unit body 1. An input jack 9 and an output jack 10 are provided on a side of the unit body 1. The input jack and the output jack include a sending wire 11 to a voice switch (not shown), a receiving wire 12 from the voice switch, and a set 13 of power source lines and ground lines. The jacks 9 and 10 are connected, via a connecting plug fitted to the jacks, to a connecting cable 14.

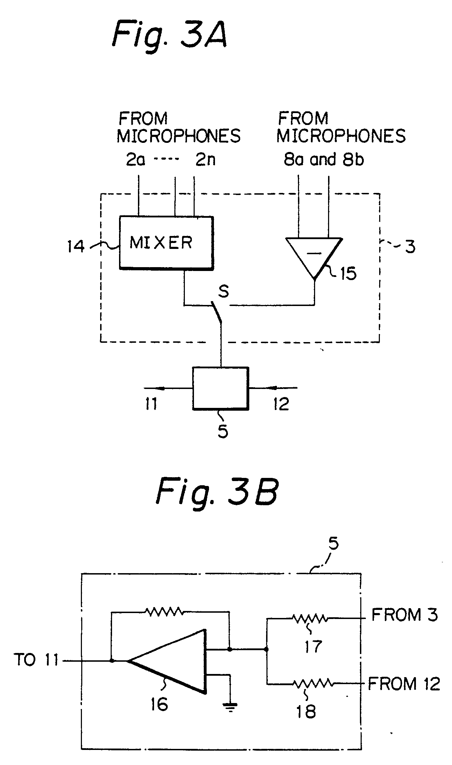

The preamplifier-mixer 3 shown in Figure 2 is formed as is shown in Figure 3A. In Figure 3a, a mixer 14 receives the outputs of the microphones 2a ... 2n, and a differential amplifier 15 receives the outputs of the microphones 8a and 8b. A switch S selects the output of the mixer 14 or the output of the differential amplifier 15 as occasion demands. Figure 3B shows the summing amplifier 5, which is formed by an operational amplifier 16 and resistors 17 and 18.

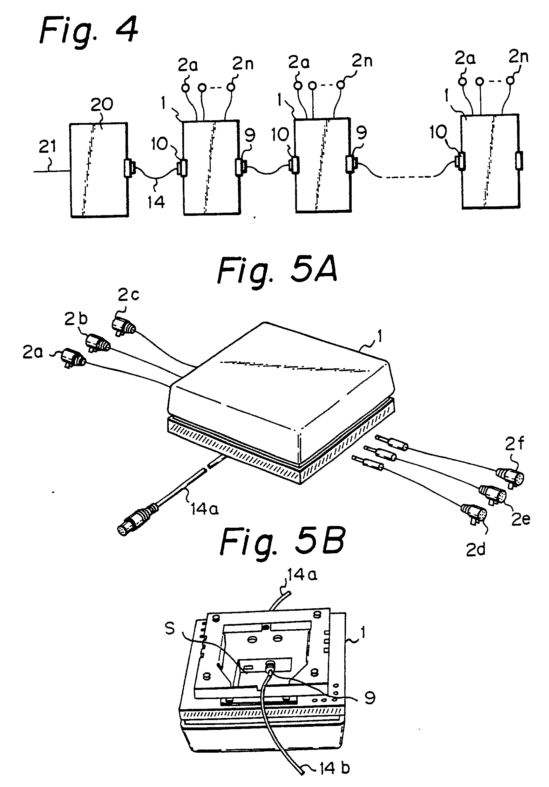

In Figure 4, the unit body 1 shown in Figure 2 is connected in cascade fashion, taking into consideration the number of participants, and sometimes in accordance with the arrangement of seats. The desired number of unit bodies are connected by the cables 14, and the cascade connection of the unit bodies is connected, via a common voice switch 20 and a cable 21, to an exchange or a voice switch in another place not shown in the drawing.

In this system a microphone is required for each participant. However, one speaker can be commonly used for several participants, for example, five or six participants, in the most ordinary arrangement of seats. Therefore, one unit may be formed by including one speaker and five or six microphone units, one receiving amplifier, a common amplifier, and a mixer. For the purpose of increasing the scale by combining a plurality of units, the summing amplifier unifies the outputs of the microphones in each unit without causing mutual interference of these outputs. That is, the input levels of the summing amplifier (the output levels of the preamplifier-mixer), can be formed of an equal level, and the outputs of the microphones supplied to a commonly used voice switch (for example, VODAS-Voice Operated Device Anti-Singing) are always constant regardless of the number of unit bodies.

The speaker included in each unit is provided with an amplifier so that the desired output can be obtained by adjusting the gain of the amplifier regardless of the number of unit bodies.

The electric power necessary for each unit can be, of course, included therein. However, it can also be supplied from a common electric source by the cable. Therefore, the cable may include several wires, including the sending cable, the receiving cable, and the electric source supply cables, and may be connected to the unit body by the jack. The number of unit bodies is adjusted in accordance with the number of participants so that the system can be utilized economically.

Figure 5A is an outline of the unit body 1 shown in Fig. 2. The microphones 2a, 2b, 2c, ... 2f and the cable 14a corresponding to the cable 14 in Fig. 2 are shown. Figure 5B shows the reverse side of the unit body shown in Fig. 5A. In Fig. 5B, the cable 14a and the jacks connecting the cable 14b to the unit body 1 are shown. Further, the switch S is used for selecting either the microphones 2a, 2b, 2c, ... 2n attached to the outside of the unit body 1 or the microphones 8a and 8b attached to the inside of the unit body 1 for use.

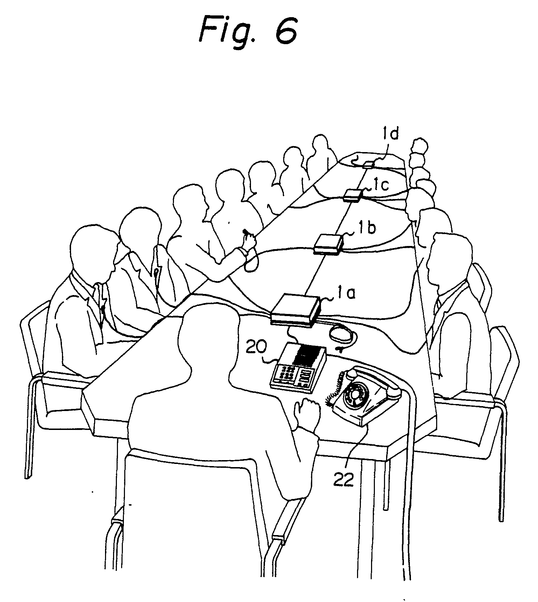

Figure 6 is an outline of a phone conference in which the system described is used. In the phone conference shown in Fig. 6, four unit bodies 1a, 1b, 1c, and 1d are used. The voice switch 20, which, for example, compares the sending voice level and the receiving voice level and switches automatically the sending mode or the receiving mode, is used for sending a message when one side wishes to do so and for receiving a message when the other side wishes to send one. When the voice switch 20 cannot function as a telephone, the telephone 22 should be used. However, the function of the telephone 22 can be combined into the voice switch 20.

As was mentioned above, in this phone conference system, the number of unit bodies is changed in accordance with the scale of the conference so that the phone conference is economical and so that a considerable practical effect can be expected.

## Claims

1. A telephone conference system in which microphones (2a....2n, 8a, 8b) and speakers (7) are connected to a telephone apparatus (22), characterised by a plurality of units (1) connected in cascade to the telephone apparatus (22), each unit (1) comprising a speaker (7) or speakers connected via an amplifier (6) to a receiving line for receiving signals from the telephone apparatus, a preamplifier-mixer (3) for unifying the outputs of a plurality of microphones (2a....2n, 8a), and a summing amplifier (5) which is connected to the preamplifier-mixer (3) of the same unit and the summing amplifier (5) of an upstream unit for unifying the output of the preamplifier-mixer (3) of the same unit and the output of a microphone or microphones from the upstream unit, the output of the summing amplifier (5) being connected to a downstream unit in series or to the telephone apparatus (22).

2. A telephone conference system according to claim 1, wherein the microphones associated with each unit comprise a plurality of first microphones (2a ... 2n) which are provided outside the unit (1), and a plurality of second microphones (8a, 8b) which are provided inside the unit (1).

3. A telephone conference system according to claim 2, wherein the preamplifier-mixer (3) comprises a mixer (14) which receives the outputs of the first microphones (2a ... 2n), a differential amplifier (15) which receives the outputs of the second microphones (8a, 8b) and a switch (S) which selectively connects the output of the mixer (14) or the output of the differential amplifier (15) with the input of the summing amplifier (5).

4. A telephone conference system according to any of claims 1 to 3, wherein the telephone apparatus includes a voice switch (20) or equipment having a voice switch function connected to the output of the summing amplifier (5) of the downstream unit (1).

**Patentansprüche**

1. Telefonkonferenzsystem, bei dem Mikrofone (2a ... 2n, 8a, 8b) und Sprecher (7) mit einem Telefonapparat (22) verbunden sind, gekennzeichnet durch eine Vielzahl von Einheiten (1), die in Kaskade mit dem Telefonapparat (22) verbunden sind, wobei jede Einheit (1) einen Sprecher (7) oder Sprecher, die über einen Verstärker (6) mit einer Empfangsleitung zum Empfangen von Signalen von dem Telefonapparat verbunden sind, einen Vorverstärker-Mischer (3) zum Vereinigen der Ausgänge einer Vielzahl von Mikrofonen (2a ... 2n, 8a), und einen Summierverstärker (5) umfaßt, der mit dem Vorverstärker-Mischer (3) derseleben Einheit und dem Summierverstärker (5) einer stromaufwärtigen Einheit zur Vereinigung des Ausgangs des Vorverstärker-Mischers (3) derselben Einheit und des Ausgangs eines Mikrofons oder von Mikrofonen von der stromaufwärtigen Einheit verbunden ist, wobei der Ausgang des Summierverstärkers (5) mit einer stromabwärtigen Einheit in Reihe oder mit dem Telefonapparat (22) verbunden ist.

2. Telefonkonferenzsystem nach Anspruch 1, bei dem die Mikrofone, die jeder Einheit zugeordnet sind, eine Vielzahl von ersten Mikrofonen (2a ... 2n) umfassen, welche außerhalb der Einheit (1) vorgesehen sind, und eine Vielzahl von zweiten Mikrofonen (8a, 8b), die innerhalb der Einheit (1) vorgesehen sind.

3. Telefonkonferenzsystem nach Anspruch 2, bei dem der Vorverstärker-Mischer (3) einen Mischer (14) umfaßt, der die Ausgänge der ersten Mikrofone (2a ... 2n) empfängt, einen Differentialverstärker (15), der die Ausgänge der zweiten Mikrofone (8a, 8b) empfängt und einen Schalter (S), der selektiv den Ausgang des Mischers (14) oder den Ausgang des Differentialverstärkers (15) mit dem Eingang des Summierverstärkers (5) verbindet.

4. Telefonkonferenzsystem nach einem der Ansprüche 1 bis 3, bei dem der Telefonapparat einen Sprachschalter (20) oder eine Einrichtung umfaßt, der bzw. die eine Sprachschalterfunktion hat, die mit dem Ausgang des Summierverstärkers (5) der stromabwärtigen Einheit (1) verbunden ist.

**Revendications**

1. Système de conférence par téléphone, dans lequel des microphones (2a ... 2n, 8a, 8b) et des haut-parleurs (7) sont relies à un appareil de téléphone (22), caractérisé par une pluralité d'unités (1) connectées en cascade à l'appareil de téléphone (22), chaque unite (1) comprenant un haut parleur (7) ou des haut-parleurs reliés via un amplificateur (6) à une ligne de réception, pour recevoir des signaux de l'appareil de téléphone, un mélangeur préamplificateur (3) pour unifier les sorties d'une pluralité de microphones (2a ...2d, 8a), et un amplificateur additif (5) que est relié au mélangeur préamplificateur (3) de la même unité et à l'amplificateur additif (5) d'une unité en amont, pour unifier la sortie du mélangeur préamplificateur (3) de la même unité et la sortie d'un ou plusieurs microphones de l'unité en amont, la sortie de l'amplificateur additif (5) étant reliée à une unité en aval en série, ou à l'appareil de téléphone (22).

2. Système de conférence par téléphone selon revendication 1, dans lequel les microphones associés à chaque unité comprennent une pluralité de premiers microphones (2a ... 2n) qui sont prévus à l'extérieur de l'unité (1) et une pluralitée de deuxièmes microphones (8a, 8b) qui sont prévus à l'intérieur de l'unité (1).

3. Système de conférence par téléphone selon revendication 2, dans lequel le mélangeur-préamplificateur (3) comprend un mélangeur (14) qui reçoit les sorties des premiers microphones (2a ... 2n), un amplificateur différentiel (15) que reçoit les sorties des deuxièmes microphones 8a, 8b) et un commutateur (S) qui connecte sélectivement la sortie du mélangeur (14) ou la sortie de l'amplificateur différentiel (15) à l'entrée de l'amplificateur additif (5).

4. Système de conférence par téléphone selon l'une quelconque des revendications 1 à 3, dans lequel l'appareil de téléphone comprend un commutateur vocal (20) ou équipement ayant une fonction de commutateur vocal, relié à la sortie de l'amplificateur additif (5) de l'unité en aval (1).

*Fig. I*

A

AMP-I

B

C

$S_1$  $S_2$  ------  $S_n$

<

$M_1$  $M_2$  --------  $M_n$

VS

E X

>

MIX     AMP-Ⅱ

M

*Fig. 2*

2a    2b    2n

1

8a

10    11    5    12    9

14    3    14

6    7

-E+

8b    13

# Fig. 3A

FROM
MICROPHONES
2a ···· 2n

FROM
MICROPHONES
8a and 8b

14 — MIXER

15

S

~ 3

11 → 5 ← 12

# Fig. 3B

5

TO 11 —

16

17 — FROM 3

18 — FROM 12

*Fig. 4*

*Fig. 5A*

*Fig. 5B*

3

# Fig. 6